# EUROPEAN PATENT SPECIFICATION

(11) **EP 2 282 169 B1**
(45) Date of publication and mention of the grant of the patent: **13.03.2013**
(21) Application number: 10170967.3
(22) Date of filing: 27.07.2010
(51) Int. Cl.: G01C 21/26, G01C 21/36, G01C 21/34

(54) **Method, mobile device and computer program product for recording parking information**
Verfahren, mobile Vorrichtung und Computerprogrammprodukt zur Aufzeichnung von Parkinformationen
Procédé, dispositif mobile et produit de programme informatique pour l'enregistrement d'information de stationnement

(30) Priority: 27.07.2009 US 228957 P; 21.06.2010 TW 99120094
(43) Date of publication of application: 09.02.2011
(73) Proprietor: HTC Corporation, Taoyuan County 330 (TW)
(72) Inventor: Lee, Yu-Cheng, 330, Taoyuan City, Taoyuan County (TW)
(74) Representative: Schultenkämper, Johannes

(56) References cited:
- EP-A1- 1 593 938
- EP-A1- 1 921 590
- WO-A1-2007/083997
- DE-A1-102007 030 259
- JP-A- 2004 177 199
- US-A1- 2006 229 808
- US-A1- 2008 167 806
- US-A1- 2009 043 490
- US-A1- 2009 058 685

## Description

### BACKGROUND

A conventional navigation device has a built-in smart electronic map and offers a route planning and navigation function. When a destination is input into the navigation device by a user, the navigation device plans a navigation route and guides the user to travel towards the destination according to the navigation route with voice messages.

When the user reaches the destination by car, he/she has to look for a parking lot to park the car if there is no parking lot at the destination. Besides, when the user parks the car, he/she needs to memorize where the parking lot and the parking space are in order to find the car later on.

However, when the user returns from the destination to the parking lot to get the car, he/she has to find the parking lot or the parking space based on his/her memory. In this case, the user may not be able to find his/her way to the parking lot or the parking space if the parking lot is far from the destination or is too large. Thereby, a technique for conveniently recording parking information and guiding the user to find the car is desired.

US 2008/167806 A1 discloses a system and method of automatically providing a local map on a wireless handheld device based on a vehicle location in response to a triggering signal. The system and method enables a user to immediately access the local map by generating an activating signal, such as one generated from the press of a button on the wireless handheld device, to assist the user in finding her final destination or to later access the local map to find her vehicle. The triggering signal may be in response to the user manually or remotely turning off the vehicle's ignition or locking the vehicle. Once the triggering signal is received, the location of the vehicle and local map information associated with the vehicle's location can be automatically stored on the user's wireless handheld device. The local map information forms the basis for the local map.

WO 2007/083997 A1 relates to a navigation device comprising a processor unit. The navigation device is arranged to detect parking of a vehicle, and, when parking is detected, determine information regarding the position of the parked vehicle. Next, the information regarding the position of the parked vehicle is stored. The stored information may be reused later to find the parked vehicle.

The object of the present invention is to provide a method for recording parking information adapted to a mobile device which shall guide and enable the user of the mobile device to drive towards a parking lot and, after the user has parked his car, to walk from the parking lot to a destination. The user shall also be guided back to the parking lot conveniently when the user is about to get the car.

The object is solved by a method comprising the features of claim 1.

### SUMMARY

Accordingly, the present application is directed to a method for recording parking information, wherein the parking information is recorded and used for guiding a user to find his car.

The present application is directed to a mobile device for recording a parking location, a map, or other information as a page, which can be viewed by a user conveniently.

The present application provides a parking information recording method adapted to a mobile device. In the present method, a current location of the mobile device is detected, and a trigger signal is detected. A parking information page is generated when the trigger signal is detected, wherein the parking information page comprises a parking image generated according to an electronic map of the current location of the mobile device and a parking location generated according to the current location of the mobile device.

According to the invention, after the step of detecting the current location of the mobile device, the method further comprises planning a first navigation route to a first parking lot around a destination according to the current location of the mobile device and displaying an electronic map comprising the first navigation route to execute a navigation function.

According to the invention, the step of planning the first navigation route to the first parking lot around the destination further comprises setting a prompt range and switching the electronic map from a 3-dimensional (3D) display mode to a 2-dimensional (2D) display mode when the mobile device enters the prompt range of the first parking lot.

In one example, after the step of setting the prompt range, the method further comprises determining whether the mobile device enters the prompt range of the first parking lot according to the current location of the mobile device, and detecting whether the first parking lot has an empty parking space when the mobile device enters the prompt range of the first parking lot, wherein if the first parking lot has no empty parking space, a second navigation route to a second parking lot around the destination is planned, and an electronic map comprising the second navigation route is displayed to execute the navigation function.

In one example, when the navigation function is executed, the method further comprises receiving a selection operation performed by a user on a third parking lot in the electronic map, planning a third navigation route to the third parking lot, and displaying an electronic map comprising the third navigation route to execute the navigation function.

In one example, the trigger signal may be triggered when the mobile device enters the first parking lot or stops in the first parking lot.

In one example, the trigger signal may be triggered when the mobile device stops in the first parking lot.

In one example, the trigger signal may be triggered when the mobile device is removed from a device stand.

In one example, the trigger signal may be triggered when a triggering operation performed by the user is received.

In one example, when the trigger signal is detected, the method further comprises planning a fourth navigation route to walk to the destination according to the current location of the mobile device and displaying an electronic map comprising the fourth navigation route to execute the navigation function.

In one example, the step of generating the parking information page comprises generating the parking image of the parking information page according to the electronic map comprising the fourth navigation route that is currently displayed by the mobile device.

In one example, the step of generating the parking information page further comprises starting an image capturing unit of the mobile device, wherein the image capturing unit captures a plurality of images around the parking area in the parking lot and serves these images as other parking images of the parking information page.

In one example, the step of generating the parking information page further comprises receiving a string input by the user and serving the string as a parking annotation of the parking information page.

In one example, the parking information page comprises the parking time, the parking duration, the parking rate, the parking fee, the name of the parking location, or the latitude and longitude of the parking location.

In one example, after the step of generating the parking information page, the method further comprises receiving an operation performed by the user on the parking information page, planning a fifth navigation route to the parking location in the parking information page according to the current location of the mobile device, and displaying an electronic map comprising the fifth navigation route to execute the navigation function.

The present application provides a mobile device for recording parking information. The mobile device comprises a positioning unit, a display unit, a storage unit, and a processing unit. The positioning unit detects a current location of the mobile device. The processing unit is coupled to the positioning unit, the display unit, and the storage unit for generating a parking information page when a trigger signal is detected and recording the parking information page into the storage unit, wherein the parking information page comprising a parking image generated by the processing unit according to an electronic map of the current location of the mobile device and a parking location generated according to the detected current location of the mobile device.

The present application further provides a computer program product which comprises instructions to be loaded into a mobile device to execute a parking information recording method which comprises following steps. First, a current location of the mobile device is detected, and a trigger signal is detected. A parking information page is generated when the trigger signal is detected, wherein the parking information page comprises a parking image generated according to an electronic map of the current location of the mobile device and a parking location generated according to the current location of the mobile device.

As described above, the present application provides a method, a mobile device, and a computer program product for recording parking information, wherein when a user drives into a parking lot and parks the car, the parking information (for example, the coordinates of the parking location and an electronic map) is recorded as a page, so that when the user returns to get the car, he/she can view the parking information in the parking information page and find the parking lot and parking space conveniently.

### BRIEF DESCRIPTION OF THE DRAWINGS

The accompanying drawings are included to provide a further understanding of the application, and are incorporated in and constitute a part of this specification. The drawings illustrate examples of the application and, together with the description, serve to explain the principles of the application.

FIG. 1 is a block diagram of a mobile device according to an example of the present application.

FIG. 2 is a flowchart of a parking information recording method according to a first example of the present application.

FIGs. 3A-3C illustrate an example of a parking information page according to the first example of the present application.

FIG. 4 is a flowchart of a parking information recording method according to a second example of the present application.

FIG. 5 is a flowchart of a parking information recording method according to a third example of the present application.

FIG. 6 is a flowchart of a parking information recording method according to a fourth example of the present application.

FIG. 7 illustrates an example of a parking information page according to the fourth example of the present application.

### DESCRIPTION OF THE EXAMPLES

Reference will now be made in detail to the present examples of the application, examples of which are illustrated in the accompanying drawings. Wherever possible, the same reference numbers are used in the drawings and the description to refer to the same or like parts.

In the present application, a navigation route is planned by setting a parking lot around a destination as an intermediate point, so as to guide a user to drive towards the parking lot. After the user parks his car, a walking route from the parking lot to the destination is automatically planned, so as to guide the user to walk towards the destination. When the user drives into the parking lot or parks the car in the parking lot, the parking information (for example, the coordinates and electronic map of the parking location) is displayed or recorded as a page in a mobile device, such that the user can be guided to the parking lot or the parking space conveniently when the user is about to get the car.

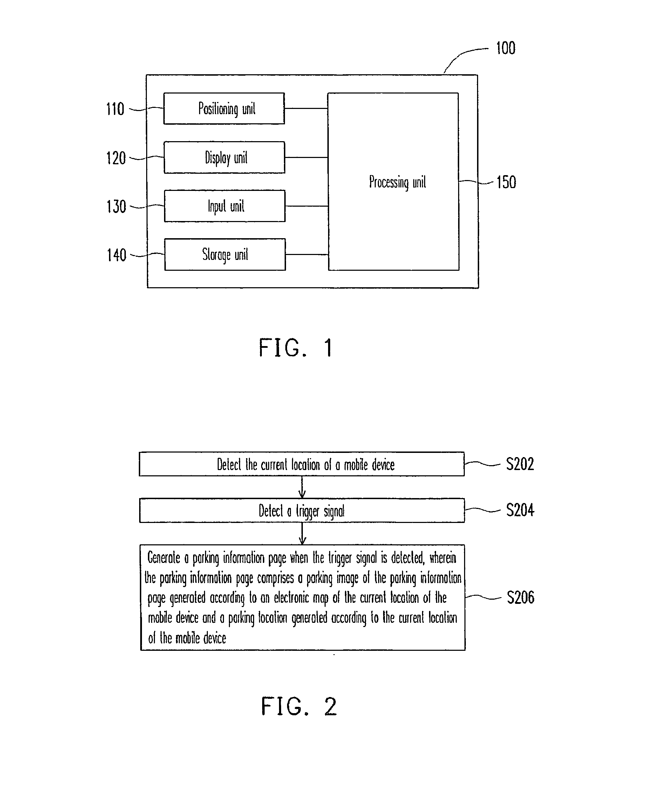

FIG. 1 is a block diagram of a mobile device according to an example of the present application. Referring to FIG. 1, the mobile device 100 may be a mobile phone, a Car PC, or a notebook computer with a positioning function, and which comprises a positioning unit 110, a display unit 120, an input unit 130, a storage unit 140, and a processing unit 150. The functions of these components are respectively described below.

The positioning unit 110 is used for obtaining the current location of the mobile device 100. The positioning unit 110 may be a global positioning system (GPS) or any other communication/positioning system that adopts the global system for mobile communication (GSM) system, the personal handy-phone system (PHS), the code division multiple access (CDMA) system, the wireless fidelity (Wi-Fi) system, the worldwide interoperability for microwave access (WiMAX) system, a radio repeater, or a radio broadcaster to perform the positioning function. However, the present application is not limited thereto.

The display unit 120 may be a liquid crystal display (LCD), a light-emitting diode (LED) display, a field emission display (FED), or other types of display.

The input unit 130 may be an input device, such as a mouse, a keyboard, a joystick, or a touch pad, for receiving user operations. Herein the input unit 130 may be a resistive touch sensor, a capacitive touch sensor, or other types of touch sensor, and which may be integrated with the display unit 120 into a touch screen.

The storage unit 140 may be any type of immovable or removable random access memory (RAM), read-only memory (ROM), flash memory, hard disc, remote memory that may be accessed remotely through a wireless network, or other similar devices, or a combination of these devices. The storage unit 140 is used for storing parking information or other information.

The processing unit 150 may be a central processing unit (CPU), a microprocessor, a digital signal processor (DSP), a programmable controller, an application specific integrated circuit (ASIC), a programmable logic device (PLD), or other similar devices, or a combination of foregoing devices.

The processing unit 150 is coupled to the positioning unit 110, the display unit 120, the input unit 130, and the storage unit 140. The processing unit 150 may generate a parking information page comprising parking information (for example, a parking image and a parking location) according to a trigger signal input by the input unit 130 or other means, such that a user can return to get the car conveniently. Below, the parking information recording method of the present application is described in detail with reference to examples of the present application.

### First Example

FIG. 2 is a flowchart of a parking information recording method according to the first example of the present application. Referring to FIG. 2, the method is adapted to the mobile device 100 illustrated in FIG. 1.

First, the positioning unit 110 detects the current location of the mobile device 100 (step S202). In an example, the processing unit 150 indicates the location of the mobile device 100 in an electronic map but the mobile device 100 executes no navigation function. In another example, the mobile device 100 executes the navigation function, in which the processing unit 150 plans a navigation route to a parking lot around a destination selected by the user and executes the navigation function to guide the user to drive towards the parking lot.

Then, the processing unit 150 detects a trigger signal (step S204). In an example, the mobile device 100 is disposed on a device stand (for example, a car holder) and connected to the device stand through a sensing component, and whether the mobile device 100 is removed from the device stand is determined through this sensing component. For example, the mobile device 100 is electrically connected to the device stand through specific pins, and whether the mobile device 100 is removed from the device stand is determined by detecting whether the pins are electrified. Alternatively, a hardware button may be disposed on the mobile device 100 for detecting a pressing operation performed by the user, and the trigger signal is triggered when the hardware button on the mobile device 100 is pressed by the user.

When the trigger signal is detected, the processing unit 150 automatically generates a parking information page. To be specific, the processing unit 150 generates a parking image of the parking information page according to the electronic map of the current location of the mobile device 100, and the processing unit 150 generates a parking location according to the current location (for example, the latitude and longitude, the address, the description of the location, such as the name of the intersection or the name of the building) of the mobile device 100 (step S206).

The parking information page is stored in the storage unit 140 so that it can be viewed by the user any time. Accordingly, the user is able to find the parking location conveniently based on the parking information page, and does not need to worry about that he/she cannot find the parking lot or the parking space or forget where the parking lot or the parking space is.

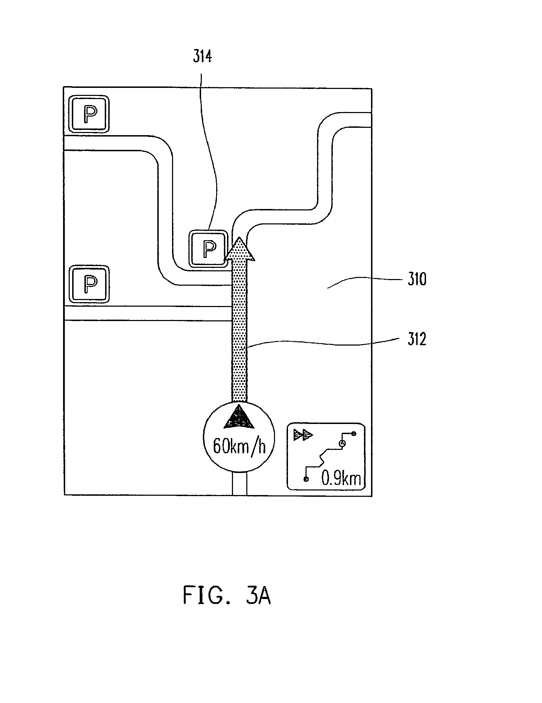

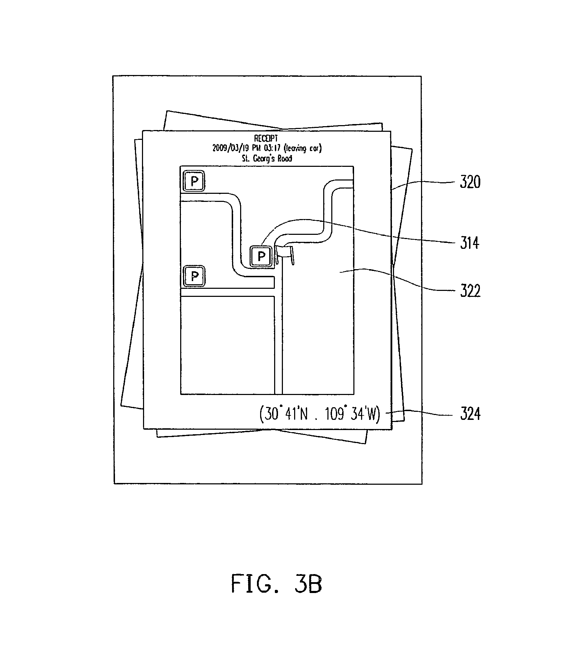

It should be noted that besides the parking image and the parking information, a plurality of function buttons may be further disposed in the parking information page such that the user may edit information in the parking information page or perform advanced functions. FIGs. 3A-3C illustrate an example of a parking information page according to the first example of the present application. Referring to FIG. 3A, a navigation image 310 is displayed on the screen of the mobile device, and a navigation route 312 is marked in the navigation image 310 for guiding the user to drive towards the parking lot 314. When the user reaches the parking lot 314 and parks the car and the trigger signal is triggered, the mobile device automatically generates the parking information page 320 as shown in FIG. 3B. To be specific, the mobile device generates a parking image 322 of the parking information page 320 according to an electronic map of the current location of the mobile device, and the mobile device detects the current location and serves it as the parking location 324 in the parking information page 320.

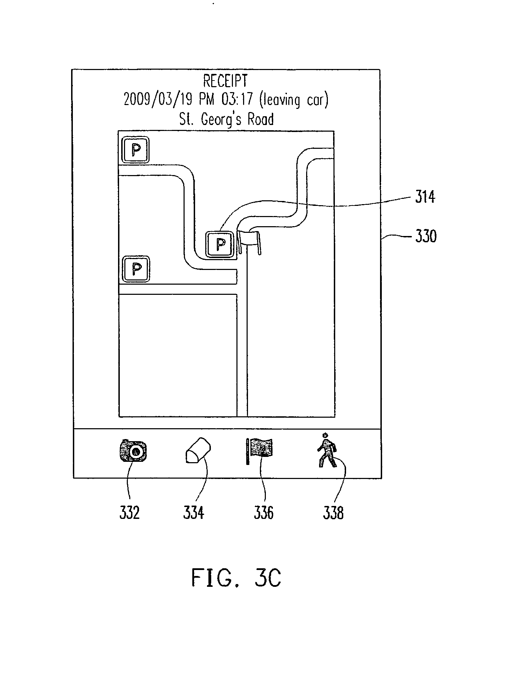

Herein if the user clicks on the parking information page 320 as illustrated in FIG. 3B, the mobile device enlarges the parking information page 320 into a parking information page 330 (as illustrated in FIG. 3C) and displays a camera button 332, a note button 334, a destination button 336, and a walking navigation button 338 at the lower portion of the parking information page 330. If the user presses the camera button 332, the mobile device activates its own camera so that the user can capture images around the parking area in the parking lot. These images may be used as other parking images in the parking information page 330 or used to replace the original parking image 322. Namely, the parking information page 330 may contain a plurality of parking image sheets for recording images related to the parking location (for example, the number of the parking space, the sign of the parking area, and the sign of the parking level) such that the user can find the parking space easily. If the user presses the note button 334, the mobile device opens a text editor, receives a string input by the user, and sets the string as a parking annotation in the parking information page 330. If the user presses the destination button 336, the mobile device denotes the destination with a mark (for example, a flag) in the parking information page 330, and the user may drag the mark to change the location of the destination. If the user presses the walking navigation button 338, the mobile device plans a walking route from the parking lot 314 to the destination and indicates it in the parking information page 330 to execute the navigation function.

Through the method described above, the mobile device 100 in the present example may integrate the parking time, the parking duration, the parking rate, the parking fee, the name of the parking location, and the latitude and longitude of the parking location into a parking information page so that a user can find the parking location conveniently by referring to the parking information page.

### Second Example

Besides generating the trigger signal through hardware detection and generating the parking information page according to a parking location and a parking image, a technique of generating the trigger signal through software detection is also provided in the present application.

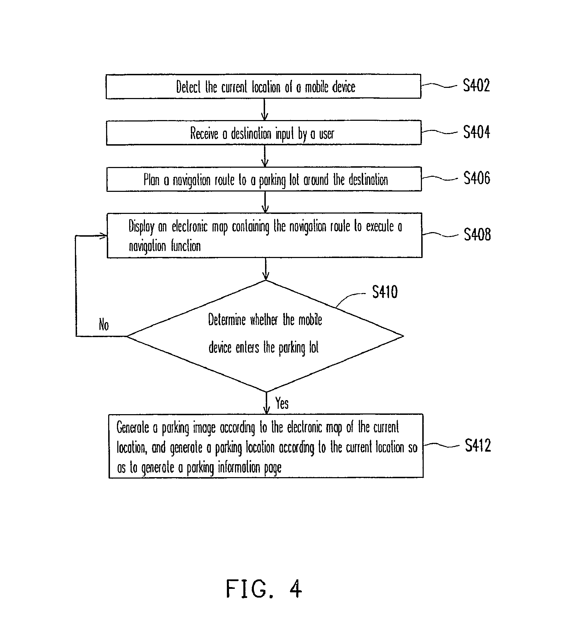

FIG. 4 is a flowchart of a parking information recording method according to the second example of the present application. Referring to FIG. 4, the method is adapted to the mobile device 100 illustrated in FIG. 1.

First, the positioning unit 110 detects the current location of the mobile device 100 (step S402) and receives a destination input by a user from the input unit 130 (step S404). Herein the user may input the name of the destination through the input unit 130 or select the destination from a menu displayed on the mobile device 100. However, the present application is not limited thereto.

Then, the processing unit 150 plans a navigation route to a parking lot around the destination according to the location detected by the positioning unit 110 and the destination received by the input unit 130 (step S406), and the processing unit 150 then displays an electronic map containing the navigation route in the display unit 120 to execute a navigation function (step S408).

When the navigation function is executed, the processing unit 150 determines whether the mobile device 100 enters the parking lot according to the location of the mobile device 100 (step S410). If the mobile device 100 enters the parking lot, the processing unit 150 generates a parking image according to the electronic map of the current location and a parking location according to the current location of the mobile device 100, so as to generate a parking information page (step S412). Otherwise, the mobile device 100 continues to execute the navigation function (step S408). In another example, the processing unit 150 determines whether to generate the parking information page according to whether the mobile device 100 stops in the parking lot (i.e., whether the car is parked). Herein a sensing unit on the mobile device 100 may be used for detecting whether the car is stopped so as to determine whether the car is parked. For example, whether the car is parked may be determined by using an acceleration sensor or by determining whether the images taken by the mobile device 100 have stopped changing. However, the present application is not limited thereto.

Through the method described above, the mobile device 100 is able to automatically capture parking information, for example parking images and coordinates, according to the relative position between the mobile device and the parking lot and generate a parking information page to be viewed by the user.

### Third Example

When a user is approaching or reaches a parking lot, he/she may change his/her mind and decide to go to another parking lot close by if the parking lot is full, the parking rate is high, or the traffic is heavy. In this case, the mobile device needs to provide a new route to guide the user to drive towards the next parking lot.

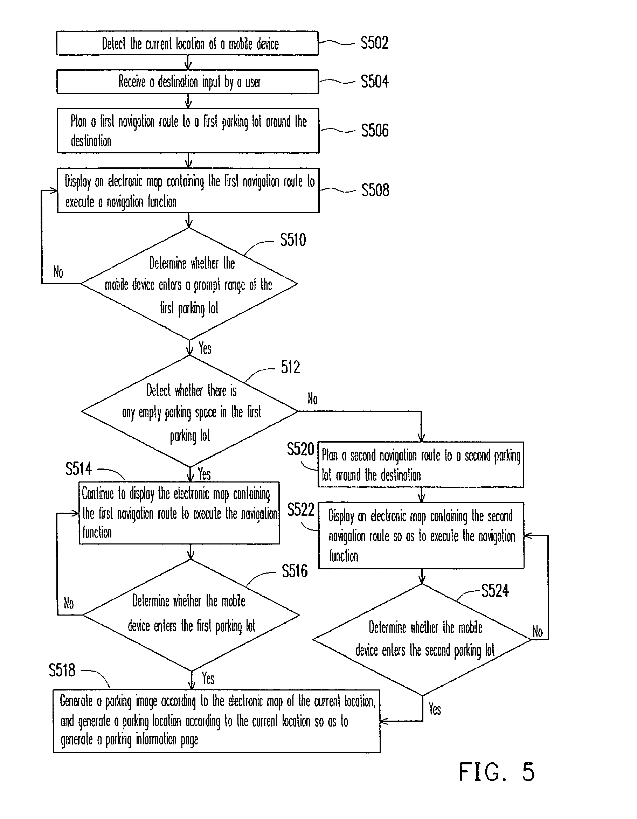

FIG. 5 is a flowchart of a parking information recording method according to the third example of the present application. Referring to FIG. 5, the method is adapted to the mobile device 100 illustrated in FIG. 1.

First, the positioning unit 110 detects the location of the mobile device 100 (step S502) and receives a destination input by a user from the input unit 130 (step S504).

Then, the processing unit 150 plans a first navigation route to a first parking lot around the destination according to the location detected by the positioning unit 110 and the destination received from the input unit 130 (step S506), and the processing unit 150 then displays an electronic map containing the first navigation route in the display unit 120 to execute the navigation function (step S508). When the user inputs the destination to plan the navigation route, the mobile device 100 may automatically set a prompt range or request the user to input the prompt range. Accordingly, when the mobile device 100 enters the prompt range of the first parking lot, whether there is any empty parking space in the first parking lot is first detected to inform the user so that the user can make decision accordingly. The prompt range may be a range within a radius of 300 meters or other ranges, which is not limited thereto.

When executing the navigation function, the processing unit 150 determines whether the mobile device 100 enters the prompt range of the first parking lot (step S510). Before the mobile device 100 enters the prompt range of the first parking lot, the processing unit 150 continues to execute the navigation function (step S508). Contrarily, when the mobile device 100 enters the prompt range of the first parking lot, the processing unit 150 further detects whether there is any empty parking space in the first parking lot (step S512) to inform the user so that the user can make decision accordingly. According to the invention, when the mobile device 100 enters the prompt range of the first parking lot, the processing unit 150 switches the displayed electronic map from a 3-dimensional (3D) display mode to a 2-dimensional (2D) display mode so that the user can see the details of the navigation route clearly.

If there is an empty parking space in the first parking lot, the processing unit 150 continues to display the electronic map containing the first navigation route so as to execute the navigation function (step S514), and the processing unit 150 determines whether the mobile device 100 has entered the first parking lot (step S516). When the mobile device 100 enters the first parking lot, the processing unit 150 generates a parking image according to the electronic map of the current location and generates a parking location according to the current location, so as to generate a parking information page (step S518). Otherwise, when the mobile device 100 has not entered the first parking lot, the mobile device 100 continues to execute the navigation function (step S514).

Contrarily, if there is no empty parking space in the first parking lot, the processing unit 150 plans a second navigation route to a second parking lot around the destination (step S520) and displays an electronic map containing the second navigation route in the display unit 120 to execute the navigation function (step S522). The processing unit 150 also determines whether the mobile device 100 enters the second parking lot while executing the navigation function (step S524). When the mobile device 100 enters the second parking lot, the processing unit 150 generates a parking image according to the electronic map of the current location and generates a parking location according to the current location, so as to generate a parking information page (step S518). Otherwise, when the mobile device 100 has not entered the second parking lot, the mobile device 100 continues to execute the navigation function (step S522).

Through the method described above, the mobile device 100 captures and displays empty space information of a parking lot in advance so that the user can respond accordingly and find a parking lot with available parking spaces conveniently.

It should be noted that when the mobile device 100 executes the navigation function, it may also receive a selection operation performed by the user on another parking lot in the electronic map, so as to plan a navigation route to this parking lot and display an electronic map containing this navigation route to execute the navigation function.

### Fourth Example

Because the parking lot may be at a distance away from the destination, the mobile device of the present application further plans a navigation route for guiding the user to walk from the parking lot to the destination after the user parks the car. This navigation route may be captured and stored in the mobile device in advance so that the user can view it any time.

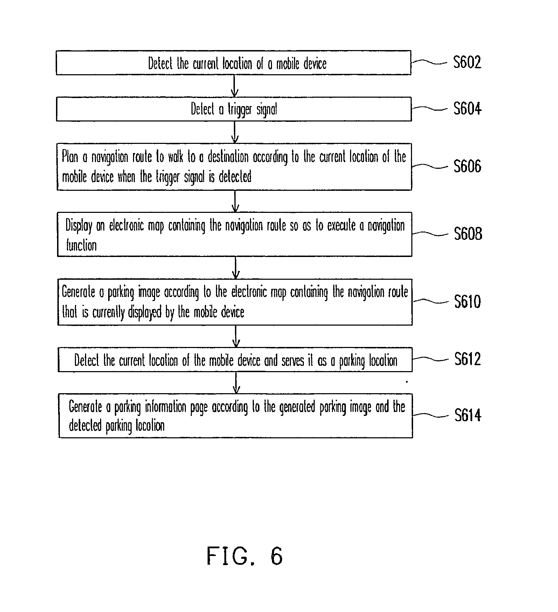

FIG. 6 is a flowchart of a parking information recording method according to the fourth example of the present application. Referring to FIG. 6, the method is adapted to the mobile device 100 illustrated in FIG. 1.

First, the positioning unit 110 detects the location of the mobile device 100 (step S602). To be specific, the processing unit 150 plans a navigation route from the current location to a parking lot around a destination according to the destination input by the user and executes a navigation function to guide the user to drive towards the parking lot.

Then, the mobile device 100 detects a trigger signal (step S604). Herein the mobile device 100 may detect the trigger signal through hardware detection or software detection, and the detailed implementation of which has been described in foregoing examples therefore will not be described herein.

When the trigger signal is detected, the mobile device 100 plans a navigation route to walk to the destination according to its current location (step S606) and displays an electronic map containing the navigation route in the display unit 140 so as to execute a navigation function (step S608).

It should be noted that when the mobile device 100 displays the electronic map, it further generates a parking image according to the currently displayed electronic map containing the navigation route (step S610). The mobile device 100 detects the current location of the mobile device 100 and serves it as a parking location (step S612), so as to generate a parking information page (step S614). The parking information page may be stored in the storage unit 140 to be viewed by the user any time. The user can get to know about the walking route between the parking lot and the destination according to the parking information page and return to the parking lot to get the car accordingly.

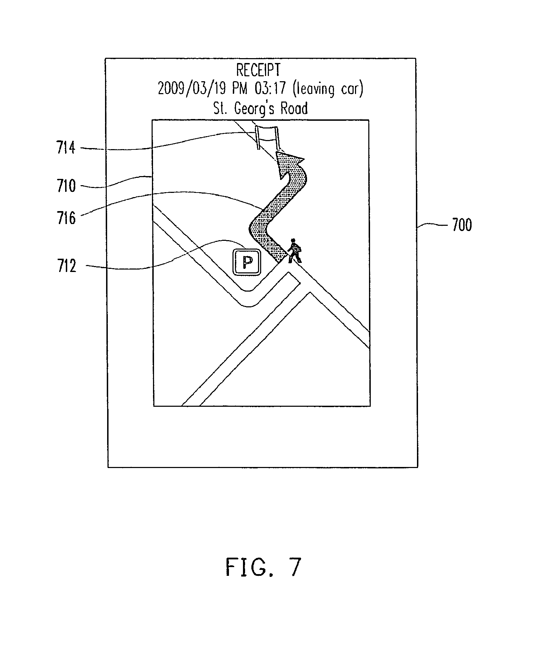

FIG. 7 illustrates an example of a parking information page according to the fourth example of the present application. Referring to FIG. 7, the parking information page 700 records an electronic map 710 containing a navigation route 716 from the parking lot 712 to the destination 714. A user can know the route to the destination 714 according to the parking information page 700. When the user is about to return to the parking lot 712 from the destination 714 to get the car, he/she can also know the route to return to the parking lot 712 according to the parking information page 700 so that the user won't get lost.

In another example, when the user is about to return from the destination to the parking lot to get the car, he/she may also request the mobile device 100 to execute the navigation function by clicking at the parking information page, so as to be guided back to the parking lot. To be specific, the mobile device 100 receives a selection operation performed by the user on the parking information page through the input unit 130, and then the processing unit 150 plans a navigation route to the parking location in the parking information page according to the current location of the mobile device 100 and displays an electronic map containing the navigation route on the display unit 140, so as to execute the navigation function.

The present application also provides a computer program product which records a computer program to be loaded into a mobile device to execute the parking information recording method described above. The computer program is composed of a plurality of program instructions (for example, an organization chart establishing program instruction, a table approving program instruction, a setting program instruction, and a deployment program instruction, etc). These program instructions can be loaded into a mobile device and executed by the same to accomplish the parking information recording method and the functions of the mobile device described above.

In summary, the present application provides a method, a mobile device, and a computer program product for recording parking information, wherein parking information is recorded as a page, and when a user drives into a parking lot or parks his/her car, parking related information is automatically captured and recorded in the parking information page. Thus, when subsequently the user returns to the parking lot to get the car, he/she can conveniently find the parking lot and parking space according to the information in the parking information page.
In conclusion a method, a mobile device and a computer program product for recording parking information are provided. In the present method, a current location of the mobile device is detected, and a trigger signal is detected. A parking information page is generated when the trigger signal is detected, wherein the parking information page comprises a parking image generated according to an electronic map of the current location of the mobile device and a parking location generated according to the current location of the mobile device.

It will be apparent to those skilled in the art that various modifications and variations can be made to the structure of the present application without departing from the scope of the application. In view of the foregoing, it is intended that the present application cover modifications and variations of this application provided they fall within the scope of the following claims and their equivalents.

## Claims

1. A method for recording parking information, adapted to a mobile device (100), the method comprising:
detecting (S202) a current location of the mobile device (100);
detecting (S204) a trigger signal;
generating (S206) a parking information page (320) when the trigger signal is detected, wherein the parking information page (320) comprises a parking image (322) generated according to an electronic map of the current location of the mobile device (100) and a parking location generated according to the current location of the mobile device (100);
**characterized in that**
after the step of detecting the current location of the mobile device (100), the method further comprises:
planning (S506) a first navigation route (312) from the current location of the mobile device (100) to a first parking lot (314) around a destination;
displaying (S508) an electronic map comprising the first navigation route (312); and
setting a prompt range, and switching the electronic map from a 3-dimensional (3D) display mode to a 2-dimensional (2D) display mode when the mobile device (100) enters the prompt range of the first parking lot (314).

2. The method of claim 1 , wherein the trigger signal is triggered when the mobile device (100) enters or stops in a parking lot, or when the mobile device (100) is removed from a device stand.

3. The method of claim 1 or 2, wherein when the trigger signal is detected, the method further comprising:
planning (S606) a fourth navigation route (716) to walk from the current location of the mobile device (100) to the destination (714);
displaying (S608) an electronic map (710) comprising the fourth navigation route (716); and
generating (S610) the parking image (710) of the parking information page (700) according to the electronic map comprising the fourth navigation route (716).

4. The method of any one of claims 1 to 3, wherein after the step of generating the parking information page (700), the method further comprises:
receiving an operation performed by the user on the parking information page (700);
planning a fifth navigation route from the current location of the mobile device (100) to the parking location in the parking information page (700); and
displaying an electronic map comprising the fifth navigation route.

5. A computer program product, comprising instructions for being loaded into a mobile device (100) to enable the mobile device (100) to execute the method for recording parking information of any one of claims 1 to 4.

6. A mobile device for recording parking information, comprising:
a positioning unit (110), for detecting a current location of the mobile device (100);
a display unit (120), for displaying the parking information;
a storage unit (140), for storing the parking information;
and
a professing unit (150), coupled to the positioning unit (110), the display unit (120), and the storage unit (140), for generating a parking information page (320) when a trigger signal is detected and recording the parking information page (320) into the storage unit (140), wherein parking information page (320) comprising a parking image (322) generated by the processing unit (150) according to an electronic map of the current location of the mobile device (100) and a parking location generated according to the detected current location of the mobile device (100);
**characterized in that**
the mobile device further comprises
an input unit (130), coupled to the processing unit (150), for receiving operations input by a user,
wherein when the input unit receives a destination input by a user, the processing unit (150) plans a first navigation route (312) from the current location of the mobile device (100) to a first parking lot (314) around the destination and displays an electronic map comprising the first navigation route (312) in the display unit (120), and the processing unit (150) further switches the electronic map from a 3D display mode to a 2D display mode when the mobile device (100) enters a prompt range of the first parking lot (314).

7. The mobile device of claim 6, wherein the processing unit (150) further determines whether the mobile device (100) enters the prompt range of the first parking lot (314) according to the current location of the mobile device (100), and the processing unit (150) detects whether the first parking lot (314) has an empty parking space when the mobile device (100) enters the prompt range of the first parking lot (314), wherein if the first parking lot (314) has no empty parking space, the processing unit (150) plans a second navigation route to a second parking lot around the destination and displays an electronic map comprising the second navigation route in the display unit (120).

8. The mobile device of any one of claims 6 or 7, wherein when the input unit receives a selection operation performed by the user on a third parking lot in the electronic map, the processing unit (150) plans a third navigation route to the third parking lot and displays an electronic map comprising
the third navigation route in the display unit (120).

9. The mobile device of any one of claims 6 to 8, wherein the processing unit (150) triggers the trigger signal when the mobile device (100) is removed from a device stand.

10. The mobile device of any one of claims 6 to 9, wherein when the input unit receives an operation performed by the user on the parking information page (320), the processing unit (150) plans a fifth navigation route from the current location of the mobile device (100) to the parking location in the parking information page (320) and displays an electronic map comprising the fifth navigation route in the display unit (120).

11. The mobile device of any one of claims 6 to 10, wherein when the trigger signal is detected, the processing unit (150) further plans a fourth navigation route (716) to walk from the current location of the mobile device (100) to the destination (714), displays an electronic map (710) comprising the fourth navigation route (716) in the display unit (120), and generates the parking image (322) of the parking information page (320) according to the electronic map (710).

12. The mobile device of any one of claims 6 to 11 further comprising:
an image capturing unit, for capturing an images, wherein when the trigger signal is detected, the image capturing unit receives a plurality of images and serves the images as other parking images (322) of the parking information page (320).

## Patentansprüche

1. Verfahren zum Aufzeichnen von Parkinformation angepasst an eine mobile Vorrichtung (100), wobei das Verfahren umfasst:
Erfassen (S202) eines aktuellen Standorts der mobilen Vorrichtung (100);
Erfassen (S204) eines Trigger-Signals;
Erzeugen (S206) einer Einpark-Informationsseite (320), wenn das Trigger-Signal erfasst wird, wobei die Einpark-Informationsseite (320) ein Parkplatz-Bild (322) umfasst, das gemäß einer elektronischen Karte von dem aktuellen Standort der mobilen Vorrichtung (100) erzeugt wird, und einen Einparkort umfasst, der gemäß dem aktuellen Standort der mobilen Vorrichtung (100) erzeugt wird;
**dadurch gekennzeichnet, dass**
nach dem Schritt des Erfassens des aktuellen Standorts der mobilen Vorrichtung (100) das Verfahren ferner umfasst:
Planen (S506) einer ersten Navigations-Route (312) von dem aktuellen Standort der mobilen Vorrichtung (100) zu einem ersten Parkplatz (314) in der Nähe eines Zielorts;
Anzeigen (S508) einer elektronischen Karte umfassend die erste Navigations-Route (312); und
Einstellen eines Anzeige-Bereichs und Umschalten der elektronischen Karte von einem 3-dimensionalen (3D) Anzeige-Modus in einen 2-dimensionalen (2D) Anzeige-Modus, wenn die mobile Vorrichtung (100) in den Anzeige-Bereich des ersten Parkplatzes (314) eintritt.

2. Verfahren nach Anspruch 1, wobei das Trigger-Signal ausgelöst wird, wenn die mobile Vorrichtung (100) in einen Parkplatz eintritt oder darin anhält, oder wenn die mobile Vorrichtung (100) von einem Vorrichtungs-Gestell entfernt wird.

3. Verfahren nach Anspruch 1 oder 2, wobei, wenn der Trigger-Signal erfasst wird, das Verfahren ferner umfasst:
Planen (S606) einer vierten Navigations-Route (716), um von dem aktuellen Standort der mobilen Vorrichtung (100) zu dem Zielort (714) zu gehen;
Anzeigen (S608) einer elektronischen Karte (710) umfassend die vierte Navigations-Route (716), und
Erzeugen (S610) des Parkplatz-Bildes (710) der Einpark-Informationsseite (700) entsprechend der elektronischen Karte umfassend die vierte Navigations-Route (716).

4. Verfahren nach einem der Ansprüche 1 bis 3, wobei nach dem Schritt des Erzeugens der Einpark-Informationsseite (700) das Verfahren ferner umfasst:
Empfangen einer Funktion, die durch den Benutzer auf der Einpark-Informationsseite (700) durchgeführt wird;
Planen einer fünften Navigations-Route von dem aktuellen Standort der mobilen Vorrichtung (100) zu dem Einparkort auf der Einpark-Informationsseite (700);
Anzeigen eines elektronischen Karte umfassend die fünfte Navigations-Route.

5. Computerprogramm-Produkt umfassend Anweisungen, um in eine mobile Vorrichtung (100) geladen zu werden, um die mobile Vorrichtung (100) zu befähigen, das Verfahren zum Aufzeichnen von Parkinformation nach einem der Ansprüche 1 bis 4 auszuführen,

6. Mobile Vorrichtung zum Aufzeichnen von Parkinformation umfassend:
eine Ortungs-Einheit (110) zum Erfassen eines aktuellen Standorts des mobilen Geräts (100);
eine Anzeige-Einheit (120) zum Anzeigen der Parkinformation;
eine Speicher-Einheit (140) zum Speichern der Parkinformation, und
eine Verarbeitungs-Einheit (150), die mit der Ortungs-Einheit (110), der Anzeige-Einheit (120) und der Speicher-Einheit (140) verbunden ist, zum Erzeugen einer Einpark-Informationsseite (320), wenn ein Trigger-Signal erfasst wird, und zum Aufzeichnen der Einpark-Informationsseite (320) in der Speicher-Einheit (140), wobei die Einpark-Informationsseite (320) ein Parkplatz-Bild (322) umfasst, das durch die Verarbeitungs-Einheit (150) gemäß einer elektronischen Karte von dem aktuellen Standort der mobilen Vorrichtung (100) erzeugt ist, und einen Einparkort umfasst, der gemäß dem erfassten aktuellen Standort der mobilen Vorrichtung (100) erzeugt ist;
**dadurch gekennzeichnet, dass**
die mobile Vorrichtung ferner umfasst:
eine Eingabe-Einheit (130), die mit der Verarbeitungs-Einheit (150) verbunden ist zum Empfangen von Funktions-Eingaben durch einen Benutzer,
wobei, wenn die Eingabe-Einheit (130) eine Zielort-Eingabe durch einen Benutzer empfängt, die Verarbeitungs-Einheit (150) eine erste Navigations-Route (312) plant von dem aktuellen Standort der mobilen Vorrichtung (100) zu einem ersten Parkplatz (314) in der Nähe eines Zielorts, und eine elektronische Karte umfassend die erste Navigations-Route (312) in der Anzeige-Einheit (120) anzeigt, und wobei die Verarbeitungs-Einheit (150) ferner die elektronische Karte von einem 3-dimensionalen (3D) Anzeige-Modus in einen 2-dimensionale (2D) Anzeige-Modus umschaltet, wenn die mobile Vorrichtung (100) in einen Anzeige-Bereich des ersten Parkplatzes (314) eintritt.

7. Mobile Vorrichtung nach Anspruch 6, wobei, die Verarbeitungs-Einheit (150) ferner bestimmt, ob die mobile Vorrichtung (100) in den Anzeige-Bereich des ersten Parkplatzes (314) eintritt gemäß dem aktuellen Standort der mobilen Vorrichtung (100), und wobei die Verarbeitungs-Einheit (150) erfasst, ob der erste Parkplatz (314) einen leeren Stellplatz aufweist, wenn die mobile Vorrichtung (100) in den Anzeige-Bereich des ersten Parkplatzes (314) eintritt, wobei, wenn der erste Parkplatz (314) keinen freien Stellplatz aufweist, die Verarbeitungs-Einheit (150) eine zweite Navigations-Route plant zu einem zweiten Parkplatz in der Nähe des Zielortes und eine elektronische Karte umfassend die zweite Navigations-Route in der Anzeige-Einheit (120) anzeigt.

8. Mobile Vorrichtung nach einem der Ansprüche 6 oder 7, wobei, wenn die Eingabe-Einheit eine Auswahl-Punktion empfängt, die durch den Benutzer an einem dritten Parkplatz in der elektronischen Karte durchgeführt ist, die Verarbeitungs-Einheit (150) eine dritte Navigations-Route plant zu dem dritten Parkplatz und eine elektronische Karte umfassend die dritte Navigations-Route in der Anzeige-Einheit (120) anzeigt.

9. Mobile Vorrichtung nach einem der Ansprüche 6 bis 8, wobei die Verarbeitungs-Einheit (150) das Trigger-Signal auslöst, wenn die mobile Vorrichtung (100) von einem Vorrichtungs-Gestell entfernt wird.

10. Mobile Vorrichtung nach einem der Ansprüche 6 bis 9, wobei, wenn die Eingabe-Einheit eine Funktion empfängt, die durch den Benutzer auf der Einpark-Informationsseite (320) durchgeführt wird, die Verarbeitungs-Einheit (150) eine fünfte Navigations-Route plant von dem aktuellen Standort der mobilen Vorrichtung (100) zu dem Einparkort auf der Einpark-Informationsseite (320) und eine elektronische Karte umfassend die fünfte Navigations-Route in der Anzeige-Einheit (120) anzeigt.

11. Mobile Vorrichtung nach einem der Ansprüche 6 bis 10, wobei, wenn das Trigger-Signal erfasst wird, die Verarbeitungs-Einheit (150) ferner eine vierte Navigations-Route (716) plant, um von dem aktuellen Standort der mobilen Vorrichtung (100) zu dem Zielort (714) zu gehen, und eine elektronische Karte (710) umfassend die vierte Navigations-Route (716) auf der Anzeige-Einheit (120) anzeigt, und das Parkplatz-Bild (322) der Einpark-Informationsseite (320) gemäß der elektronischen Karte (710) erzeugt.

12. Mobile Vorrichtung nach einem der Ansprüche 6 bis 11 umfassend:
eine Bildaufnahme-Einheit zum Aufnehmen eines Bildes, wobei, wenn das Trigger-Signal erfasst wird, die Bildaufnahme-Einheit eine Vielzahl von Bildern empfängt und die Bilder als weitere Parkplatz-Bilder (322) der Einpark-Informationsseite (320) anbietet.

## Revendications

1. Une méthode d'enregistrement d'une information de stationnement, adapté à un dispositif mobile (100), la méthode comportant :
la détection (S202) d'une position courante du dispositif mobile (100) ;
la détection (S204) d'un signal de déclenchement ;
la génération (S206) d'une page d'information de stationnement (320) lors de la détection du signal de déclenchement, dans laquelle la page d'information de stationnement (320) comporte une image de stationnement (322) générée en fonction d'une carte électronique de la position courant du dispositif mobile (100) et
d'une position de stationnement générée en fonction de la position courante du dispositif mobile (10D) ;
**caractérisée en ce que** à la suite de la détection de la position courante du dispositif mobile (100), la méthode comporte en outre :
la planification (S506) d'une première rouge de navigation (312) à partir de la position courante du dispositif mobile (100) vers un premier lot de stationnement (314) autour d'une destination ;
l'affichage (S508) d'une carte électronique comportant la première route de navigation (312) ; et
la fixation d'une distance guide, et la commutation de la carte électronique d'un mode d'affichage à trois dimensions (3D) vers un mode d'affichage à 2 deux dimensions (2D) lorsque le dispositif mobile (100) entre la distance guide du premier lot de stationnement (314).

2. La méthode de la revendication 1, dans laquelle le signal de déclenchement est déclenché lorsque le dispositif mobile (100) entre ou s'arrête dans un lot de stationnement, ou lorsque le dispositif mobile (100) est enlevé d'un support.

3. La méthode de la revendication 1 ou 2, dans laquelle lorsque le signal de déclenchement est détecté, la méthode comporte en outre :
la planification (S606) d'une quatrième route de navigation (716) permettant de marcher de la position courante du dispositif mobile (100) vers la destination (714) ;
l'affichage (S806) d'une carte électronique (710) comportant la quatrième route de navigation (71B) ; et
la génération (S610) d'une image de stationnement (710) de la page d'information de stationnement (700) en fonction de la carte électronique comportant la quatrième route de navigation (716).

4. La méthode selon l'une quelconque des revendications 1 à 3, dans laquelle à la suite de l'étape de génération de la page d'information de stationnement (700), la méthode comporte en outre :
la réception d'une opération effectuée par l'utilisateur sur la page d'information de stationnement (700) ;
la planification d'une cinquième route de navigation à partir de la position courante du dispositif mobile (100) vers la position de stationnement dans la page d'information de stationnement (700) ; et
l'affichage d'une carte électronique comportant la cinquième route de navigation.

5. Un programme d'ordinateur, comportant des instructions destinées à être chargées dans un dispositif mobile (100) pour permettre au dispositif mobile (100) d'exécuter la méthode d'enregistrement d'une information de stationnement de l'une quelconque des revendications 1 à 4.

6. Un dispositif mobile pour l'enregistrement d'une information de stationnement, comportant :
une unité de positionnement (110), pour détecter une information courante du dispositif mobile (100) ;
une unité d'affichage (120), pour l'affichage d'une information de stationnement ;
une unité de stockage (140), pour le stockage d'une information de stationnement ;
et
une unité de traitement (150), couplée à l'unité de positionnement (110), l'unité d'affichage (120), et l'unité de stockage (140), pour générer une page d'information de stationnement (320) lors de la détection d'un signal de déclenchement et
l'enregistrement d'une page d'information de stationnement (320) au sein de l'unité de stockage (140), dans laquelle la page d'information de stationnement (320) comporte une image de stationnement (322) générée par l'unité de traitement (150) selon une carte électronique de la position courante du dispositif mobile (100) et une position de stationnement générée en fonction de la position courante détectée du dispositif mobile (100) ;
**caractérisé en ce que** le dispositif comporte en outre une unité de saisie (130), couplée à l'unité de traitement (150) pour la réception d'opération saisies par un utilisateur,
dans laquelle lorsque l'unité de saisie reçoit une entrée de destination de la part d'un utilisateur, l'unité de traitement (150) planifie une première route de navigation (312) depuis la position courante du dispositif mobile (100) vers un premier lot de stationnement (314) autour de la destination et affiche une carte électronique comprenant la première route de navigation (312) dans l'unité d'affichage (120), et
l'unité de traitement (150) commute en outre la carte électronique d'un mode d'affichage 3D vers un mode d'affichage 2D lorsque le dispositif mobile (100) entre dans une distance guide du premier lot de stationnement (314).

7. Le dispositif mobile de l'une quelconque de la revendication 6, dans lequel l'unité de traitement (150) détermine en outre si le dispositif mobile (100) entre dans la distance guide du premier lot de stationnement (314) en fonction de la position courante du dispositif mobile (100), et l'unité de traitement (150) détecte que le premier lot de stationnement (314) dispose d'un espace de stationnement vide lorsque le dispositif mobile (100) entre dans la distance guide du premier lot de stationnement (314), dans lequel lorsque le premier lot de stationnement (314) ne comporte aucune place de stationnement disponible, l'unité de traitement (150) planifie une seconde route de navigation vers un second lot de stationnement autour de la destination et affiche une carte électronique sur l'unité d'affichage (120) comportant la seconde route de navigation.

8. Le dispositif mobile de l'une quelconque des revendications 6 ou 7, dans lequel lorsque l'unité de saisie saisit une opération de sélection effectuée par l'utilisateur sur un troisième lot de stationnement dans la carte électronique, l'unité de traitement (150) planifie une troisième route de navigation vers le troisième lot de stationnement et affiche dans l'unité d'affichage (120) une carte électronique comprenant la troisième route de navigation.

9. Le dispositif mobile de l'une quelconque des revendications 6 à 8, dans lequel l'unité de traitement (150) déclenche le signal de déclenchement lorsque le dispositif mobile (100) est enlevé d'un support de maintien.

10. Le dispositif mobile de l'unique quelconque des revendications 6 à 9, dans lequel lorsque l'unité de saisie saisit une opération effectuée par l'utilisateur sur une page d'information de stationnement (320), l'unité de traitement (150) planifie une cinquième route de navigation à partir de la position courante du dispositif mobile (100) vers la position de stationnement dans la page d'information de stationnement (320) et affiche une carte électronique dans l'unité d'affichage (120) comprenant la cinquième route de navigation.

11. Le dispositif mobile de l'une quelconque des revendications 6 à 9, dans lequel lors de la détection du signal de déclenchement, l'unité de traitement (150) planifie en outre une quatrième route de navigation (716) pour la marche depuis la position courante du dispositif mobile (100) vers la destination (714), affichage dans l'unité d'affichage (120) une carte électronique (710) comprenant la quatrième route de navigation (716) , et génère une image de stationnement (322) sur la page d'information de stationnement (320) en fonction de la carte électronique (710).

12. Le dispositif mobile de l'une quelconque des revendications 6 à 11 comprenant en outre
une unité de prise d'image pour la prise d'une image, dans laquelle lors de la détection du signal de déclenchement, l'unité de prise d'image reçoit une pluralité d'image et sert les images comme autres images (322) de la page d'information de stationnement (320).
